(19) **Europäisches Patentamt**

**European Patent Office**

**Office européen des brevets**

(11) Veröffentlichungsnummer: **0 285 699 B1**

# (12) EUROPÄISCHE PATENTSCHRIFT

(45) Veröffentlichungstag der Patentschrift: **08.04.92**

(21) Anmeldenummer: **87114402.8**

(22) Anmeldetag: **02.10.87**

(51) Int. Cl.⁵: **H02G 1/08**, B25B 7/00

(54) **Zange zum Verschieben von flexiblem Strangmaterial.**

(30) Priorität: **01.04.87 DE 3710922**

(43) Veröffentlichungstag der Anmeldung:
**12.10.88 Patentblatt 88/41**

(45) Bekanntmachung des Hinweises auf die
Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**WO-A-79/00511**
**DE-A- 3 234 898**
**US-A- 777 021**
**US-A- 3 763 722**

(73) Patentinhaber: **Cielker, Werner**
**Emil-Hoffmann-Strasse 9**
**W-5000 Köln 50(DE)**

(72) Erfinder: **Cielker, Werner**
**Emil-Hoffmann-Strasse 9**
**W-5000 Köln 50(DE)**

(74) Vertreter: **Köhne, Friedrich, Dipl.-Ing.**
**Rondorferstrasse 5a**
**W-5000 Köln 51 (Marienburg)(DE)**

Rank Xerox (UK) Business Services

## Beschreibung

Die Erfindung bezieht sich auf eine Zange zum Verschieben von flexiblem Strangmaterial, insbesondere flexiblen Stäben, zum Einziehen von Kabeln in Kabelschutzrohre, mit einem Zangenkörper, der aus einem länglichen Griffteil und einem Kopfteil besteht und der eine längsverlaufende Rille zur Aufnahme eines Teils des Strangmaterials aufweist, wobei nahe dem einen Ende des Zangenkörpers ein Handgriff schwenkbar gelagert ist und wobei an dem Handgriff eine Leiste angeformt ist und der Handgriff in dem Kopfteil derart gelagert ist, daß die Leiste mindestens teilweise in die längsverlaufende Rille des Zangenkörpers eingreift.

In dem hier besonders interessierenden Fachgebiet geht es vor allem darum, Kabel oder elektrische Leitungen in Kabelschutzrohre einzuziehen oder defekt gewordene elektrische Leitungen oder Kabel gegen neue auszutauschen, zum Beispiel in elektrischen Hausinstallationen, und zwar in die in den Wänden verlegten Schutzrohre nachträglich zusätzliche Leitungen einzuziehen. Da die Schutzrohre bzw. Leerrohre meist nur an einigen Stellen, zum Beispiel über die Schalt-, Steck- und Verteilerdosen zugänglich sind, gelingt es meist nicht, zumindest nicht über größere Strecken, die Kabel oder elektrischen Leitungen ohne Hilfsmittel in die Schutzrohre einzuziehen sowie die vorerläuterten Arbeiten auszuführen. Man verwendet daher vielfach flexible Stäbe, die sich einerseits den evtl. vorhandenen Krümmungen oder verlegten Schutzrohren anpassen können, die aber andererseits eine so große Druck- und Knickfestigkeit haben, daß man sie auch über größere Längen von beispielsweise 25 Metern und mehr in die Schutzrohre einschieben kann. Nach dem Einschieben des flexiblen Stabes wird dann an dem vorderen Ende das einzuziehende Kabel befestigt. Mit dem Zurückziehen des flexiblen Stabes wird dann das elektrische Kabel oder die betreffende Leitung in das Schutzrohr eingezogen.

Die Handhabung derartiger flexibler Stäbe ist in der Praxis sehr mühevoll, besonders wenn es sich um verhältnismäßig dünne Stäbe handelt, die über größere Strecken in Schutzrohre eingeschoben und zusammen mit dem einzuziehenden Kabel, elektrischen Leitungen oder dgl. zurückgezogen werden müssen. Da die flexiblen Stäbe zu leicht in der Hand gleiten und daher nicht die erforderlichen Verschiebekräfte aufgetragen werden können, werden die Stäbe in der Praxis von den Handwerkern mehrfach um das Handgelenk oder über den Ellenbogen und den Unterarm oder in anderer Weise umgebogen, um die Griffigkeit zu erhöhen. Abgesehen von der Verletzungsgefahr für den Bedienungsmann besteht die weitere Gefahr, daß der flexible Stab übermäßig gebogen und geknickt oder anderweitig beschädigt wird und dadurch seine Druck- und Knickfestigkeit verliert.

Aus der FR-OS 23 86 168 ist bereits eine Zange bekannt, die das Einziehen von elektrischen Kabeln erleichtern soll. Bei dieser bekannten Konstruktion weist der Zangenkörper, der die eine Klemmbacke trägt, einen Längsschlitz auf, in welchem ein Gelenk zwischen dem Handgriff und einem Hebelarm verschieblich ist. Dieser Hebelarm ist knieförmig mit einem weiteren Hebelarm gelenkig verbunden, der seinerseits an dem Zangenkörper angelenkt ist und der die zweite Klemmbacke trägt. Wenn man bei einem zwischen die beiden Klemmbacken eingelegten elektrischen Kabel an dem Handgriff zieht, so werden durch Wirkung des knieförmig gestalteten Hebelsystems die beiden Klemmbacken zueinander geführt und klemmen das elektrische Kabel zwischen sich ein. Bei dieser bekannten Zange kann ein Verschieben des elektrischen Kabels nur in einer Richtung, nämlich in Zugrichtung des Handgriffs erfolgen, denn wenn der Handgriff in die entgegengesetzte Richtung geschoben wird, wird dadurch über das Hebelsystem ein öffnen der beiden Klemmbacken bewirkt. Da die beschriebenen Hebel mit ihren Gelenken von außen frei zugänglich sind, besteht in der Praxis eine Verletzungsgefahr für die bedienende Person. Der Klemmdruck zwischen den beiden Klemmbakken ist von der Zugkraft am Handgriff abhängig und läßt sich daher nicht unabhängig von dieser Zugkraft dosieren. Schließlich stimmt die Richtung des besagten Schlitzes und die Richtung der ausgeübten Zugkraft nicht mit der Richtung des eingelegten und zu ziehenden elektrischen Kabels überein, ist vielmehr hierzu versetzt, so daß in der Praxis beim schrittweisen Ziehen des elektrischen Kabels an diesem leicht Knickstellen auftreten können.

Eine weitere Zange ist aus der DE-PS 34 16 652 bekannt. Bei dieser Zange ist ein längsverlaufender seitlich öffnender Schlitz zum Einlegen des Strangmaterials vorgesehen. Innerhalb des Zangenkörpers befindet sich eine Klemmleiste, die nach dem Schlitz hin verschiebbar ist und zum Festklemmen des Strangmaterials dient. Der Zangenkörper besteht hier aus zwei miteinander verbundenen Platten, zwischen denen sich die Klemmleiste befindet, welche in ihrem mittleren von dem Schlitz abliegenden Bereich einen Nocken aufweist, an welchem ein zwischen den Platten befindlicher schwenkbarer Hebel anliegt. Das freie Ende dieses Hebels liegt an der Innenfläche des schwenkbaren Handgriffs an, so daß bei Betätigen des Handgriffs der Hebel auf den Nocken der Klemmleiste gedrückt wird und sich die Klemmleiste in Klemmstellung bewegt. Diese Zange hat sich in der Praxis recht gut bewährt, insbesondere dann wenn die Zange ständig im Einsatz ist und sich der verhältnismäßig große Bauaufwand rechtfertigt.

Eine zu Anfang angegebene Zange ist aus der WO 79/00511 bekannt. Dieses Handwerkszeug zum Einziehen von Kabeln besteht aus zwei separaten Bauteilen, nämlich einem unteren und einem oberen Bauteil, die durch eine Kette zusammengehalten werden, damit nicht das eine oder andere Bauteil verloren geht. Das untere Bauteil weist eine längsverlaufende Rille auf, in die eine Zugfeder eingelegt werden kann. Dieses Einlegen kann jedoch nur dann erfolgen, wenn das untere Bauteil auf der Oberseite völlig offen ist, d.h. wenn das zweite Bauteil abgenommen ist. Nach dem Einlegen der Zugfeder kann das obere Bauteil aufgesetzt werden, so daß die Enden eines querverlaufenden Bolzens am vorderen Ende des oberen Bauteils in Schlitze am Kopf des unteren Bauteils eingreifen. Diese Schlitze befinden sich in zwei seitlichen angenieteten Metallplatten.

Der Erfindung liegt demgegenüber die Aufgabe zugrunde, eine Zange mit geringem Bauaufwand zu schaffen, mit der es noch dazu möglich ist, die Zug- oder Druckkräfte genauer in Richtung des zu verschiebenden flexiblen Strangmaterials zu übertragen und ein Knicken des Strangmaterials weitgehend zu vermeiden.

Die gestellte Aufgabe wird dadurch gelöst, daß die Lagerung des Handgriffs an einem angeformten, erweiterten Kopfteil des Zangenkörpers nicht lösbar vorgesehen ist, daß der Zangenkörper gegenüber dem Handgriff mit einer Spaltöffnung zum Einlegen des Strangmaterials versehen ist, so daß die Leiste erst bei Betätigung des Handgriffs in die Rille eingreift, und daß auf dem Boden der Rille eine hartgummiartige Leiste angeordnet ist.

Vorteilhafte Ausgestaltungen der Erfindung ergeben sich aus den Unteransprüchen.

In der Zeichnung ist ein Ausführungsbeispiel der Erfindung im Schema dargestellt, und zwar zeigen

Figur 1 eine Seitenansicht auf eine Zange in Ruhestellung,

Figur 2 eine Draufsicht hierzu gemäß Pfeilrichtung II in Figur 1,

Figur 3 eine teilweise Vorderansicht gemäß Linie III - III in Figur 1,

Figur 4 einen Teilquerschnitt gemäß Schnittlinie IV - IV in Figur 1,

Figur 5 einen Teillängsschnitt gemäß Schnittlinie V - V in Figur 2 und

Figur 6 einen Teillängsschnitt gemäß Schnittlinie VI - VI in Figur 2 mit einer Seitenansicht auf die Zange in Betriebsstellung.

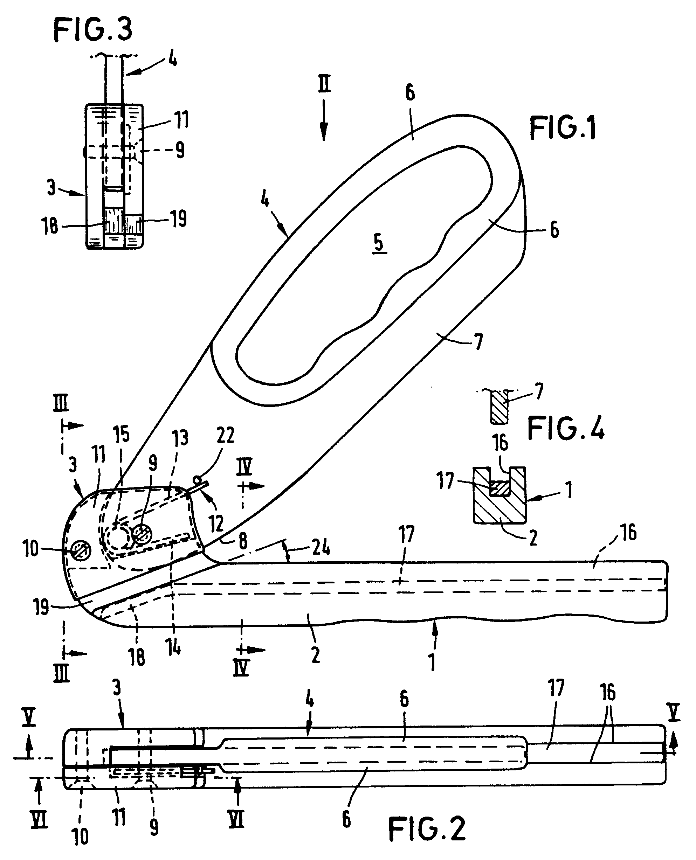

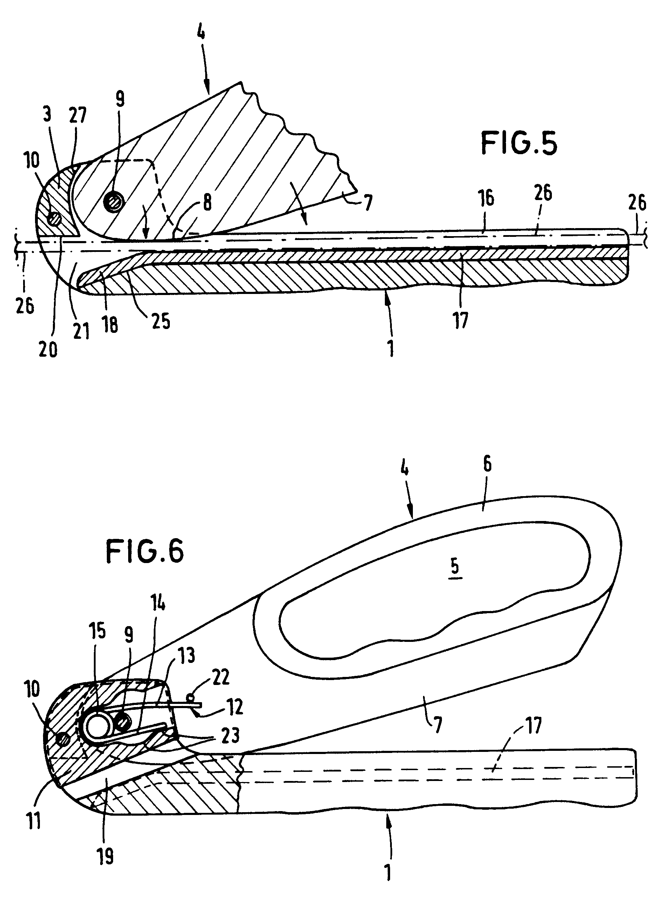

Die in der Zeichnung dargestellte erfindungsgemäße Zange weist einen Zangenkörper 1 auf, der im wesentlichen aus einem länglichen Griffteil 2 und einem angeformten erweiterten Kopfteil 3 besteht. In den Zangenkörper ist eine längsverlaufende Rille 16 eingearbeitet, welche einen rechteckigen Querschnitt aufweist und bei den Darstellungen nach den Figuren 1, 4, 5 und 6 nach oben hin öffnet. Ferner ist ein Handgriff 4 vorgesehen, der im mittleren Teil des nach oben hin erweiterten Kopfteils 3 mittels einer Schraube 9 gehalten und schwenkbar gelagert ist. Der Handgriff 4, dessen Länge im wesentlichen der Länge des Griffteils 2 entspricht, weist eine angeformte längsverlaufende Leiste 7 auf, deren Dicke der Breite der Rille 16 angepaßt ist, so daß die Leiste 7 bei Betätigung des Handgriffs 4 mindestens teilweise in die längsverlaufende Rille 16 des Zangenkörpers 1 eingreift, wie es beispielsweise in den Figuren 5 und 6 dargestellt ist.

Vorteilhafterweise weist die Leiste 7 nach dem gelagerten Ende des Handgriffs 4 zu ein gebogenes Teil 8 auf, wodurch das in die Rille 16 eingelegte, in Figur 5 strichpunktiert angedeutete Strangmaterial 26 während der Schiebebewegung unter Druck oder Zug besonders schonend behandelt wird. Wie weit die Leiste 7 in die Rille 16 eingreift und auf das Strangmaterial 26 klemmend drückt, hängt einmal von dem Druck ab, der von Hand zwischen dem schwenkbaren Handgriff 4 und dem Griffteil 2 des Zangenkörpers erzeugt wird und zum anderen von der Dicke bzw. dem Durchmesser des Strangmaterials 26. Im allgemeinen genügt es aber zum ausreichenden Festklemmen des Strangmaterials während der Verschiebebewegung, daß nur das gebogene Teil 8 der Leiste 7 an dem Strangmaterial anliegt. Auf diese Weise ist ein schnelles Öffnen und Schließen der Zange durch entsprechendes Bewegen des Handgriffs und damit ein schrittweises Schieben oder Ziehen möglich.

Vorteilhafterweise ist auf dem Boden der Rille 16 eine Hartgummileiste 17 angeordnet, die sich über die gesamte Länge der Rille erstreckt. Hierdurch wird einmal die Rutschfestigkeit erhöht und zum anderen das eingeklemmte Strangmaterial geschont.

Damit der Handgriff 4 jeweils selbsttätig in die Ruhelage gemäß Figur 1 zurückkehrt, ist zwischen dem Kopfteil 3 des Zangenkörpers 1 und dem Handgriff 4 eine Feder 12 angeordnet, die also so vorgespannt ist, daß der Handgriff 4, wie gesagt, in gespreizte Stellung zu dem Zangenkörper 1 gedrückt wird. Wie aus den Figuren 1 und 6 zu erkennen ist, weist die Feder 12 zwei Federschenkel 13 und 14 und eine um etwa 540° gewundene Federwindung 15 auf. Durch die Federwindung 15 wird die Federkennlinie wesentlich verbessert und eine hohe Lebensdauer der Feder erreicht. Der eine Federschenkel 14 ist an einer Anschlagfläche 23 des Kopfteils 3 und der andere Federschenkel 13 an einem Haltestift 22 des Handgriffs 4 gemäß Figur 6 eingespannt. Es versteht sich, daß eine genügend große Ausnehmung zur Unterbringung der Feder in dem Kopfteil 3 vorgesehen ist.

Eine weitere vorteilhafte Ausgestaltung der Erfindung ergibt sich dadurch, daß die Rille 16 im Bereich des Kopfteils 3 unter einem spitzen Winkel 24 (Figur 1) abgeschrägt ist. Dementsprechend ist auch die in die Rille eingelegte Hartgummileiste 17 im Bereich 18 entsprechend abgekantet. Wie insbesondere aus Figur 5 ersichtlich ist, ist ein Bereich zwischen einer entsprechenden Schrägfläche 25 und einer Anschlagfläche 20 für das Strangmaterial 26 etwa trapezartig erweitert. Die Erweiterung ist mit dem Bezugszeichen 21 versehen. Auf diese Weise ergibt sich einmal im Bereich des Kopfteils 3 eine gute Führung des Strangmaterials und zum anderen kann man durch entsprechendes Schwenken der Zange die von der Zange ausgeübten Druck- oder Zugkräfte genau auf die Verschieberichtung bzw. Längsrichtung des Strangmaterials ausrichten.

Zur Vereinfachung der Herstellung und Montage ist an dem Kopfteil 3 seitlich eine Montageplatte 11 angeschraubt. Hierzu dient außer der Schraube 9, an der der Handgriff 4 schwenkbar gelagert ist, noch eine weitere Schraube 10. Die Montageplatte 11 ist derart gestaltet, daß eine parallel zu der Schrägfläche 25 verlaufende Spaltöffnung 19 (Figur 1 und 6) in Verbindung mit dem abgezweigten Teil der Rille 16 verbleibt. Die Spaltöffnung 19 dient zur besseren Kontrolle des Strangmaterials und zum anderen zum erleichterten Einlegen oder Herausnehmen des Strangmaterials aus der Zange. Wie Figur 5 verdeutlicht, ist in dem Kopfteil 3 noch eine gebogene Anschlagfläche 27 für die Spreizstellung des Handgriffs 4 vorgesehen.

Eine weitere vorteilhafte Ausgestaltung der Erfindung ergibt sich dadurch, daß der Handgriff 4 eine Handöffnung 5 aufweist, welche beiderseitig von einem Wulst 6 umgeben ist. Die Handöffnung hat den Vorteil, daß die Zange während des Arbeitens nicht von der Hand abrutschen und herabfallen kann. Außerdem ergibt sich dadurch eine schnellere und einfachere Handhabung und es können die Druck-oder Zugkräfte von der Hand besser auf die Zange übertragen werden. Die beiderseitigen Wulste 6 dienen einmal der Verstärkung des Handgriffs und zum anderen einer besseren Anlage für die Hand des Handwerkers. Diesem Zweck dienen auch die besonders in den Figuren 1 und 6 gezeichneten wellenförmigen Erhebungen und Vertiefungen an der Innenseite der Wulste 6 und an der Unterseite des Griffteils 2 des Zangenkörpers.

Der gering zu haltende Bauaufwand für die Herstellung der Zange wird schließlich noch dadurch verringert, daß der Zangenkörper 1 und der Handgriff 4 aus einem zähharten Kunststoff bestehen, die einfach in Spritzgußformen herstellbar sind. Auch die Montageplatte 11 besteht vorteilhafterweise aus zähhartem Kunststoff.

## Patentansprüche

1. Zange zum Verschieben von flexiblem Strangmaterial, insbesondere flexiblen Stäben, zum Einziehen von Kabeln in Kabelschutzrohre, mit einem Zangenkörper (1), der aus einem länglichen Griffteil (2) und einem Kopfteil (3) besteht und der eine längsverlaufende Rille (16) zur Aufnahme eines Teils des Strangmaterials aufweist, wobei nahe dem einen Ende des Zangenkörpers (1) ein Handgriff (4) schwenkbar gelagert ist und wobei an dem Handgriff (4) eine Leiste (7) angeformt ist und der Handgriff (4) in dem Kopfteil derart gelagert ist, daß die Leiste (7) mindestens teilweise in die längsverlaufende Rille (16) des Zangenkörpers (1) eingreift, dadurch gekennzeichnet, daß die Lagerung des Handgriffs (4) an einem angeformten, erweiterten Kopfteil (3) des Zangenkörpers (1) nicht lösbar vorgesehen ist, daß der Zangenkörper (1) gegenüber dem Handgriff (4) mit einer Spaltöffnung (19) zum Einlegen des Strangmaterials versehen ist, so daß die Leiste (7) erst bei Betätigung des Handgriffs (4) in die Rille (16) eingreift, und daß auf dem Boden der Rille (16) eine hartgummiartige Leiste (17) angeordnet ist.

2. Zange nach Anspruch 1, dadurch gekennzeichnet, daß die Leiste (7) nach dem gelagerten Ende des Handgriffs (4) zu ein gebogenes Teil (8) aufweist.

3. Zange nach einem der Ansprüche 1 oder 2, dadurch gekennzeichnet, daß zwischen dem Kopfteil (3) des Zangenkörpers (1) und dem Handgriff (4) eine Feder (12) derart angeordnet ist, daß der Handgriff (4) in gespreizte Stellung zu dem Zangenkörper (1) gedrückt wird.

4. Zange nach Anspruch 3, dadurch gekennzeichnet, daß die Feder (12) zwei Federschenkel (13, 14) und eine um etwa 540° gewundene Federwindung (15) aufweist, und daß der eine Federschenkel (14) an einer Anschlagfläche (23) des Kopfteils (3) und der andere Federschenkel (13) an einem Haltestift (22) des Handgriffs (4) anliegen.

5. Zange nach einem der vorhergehenden Ansprüche, dadurch gekennzeichnet, daß die Rille (16) im Bereich des Kopfteils (3) unter einem spitzen Winkel (24) abgeschrägt und zwischen einer entsprechenden Schrägfläche (25) und einer Anschlagfläche (20) für das Strang-

4

material (26) etwa trapezartig erweitert ist.

6. Zange nach Anspruch 5, dadurch gekennzeichnet, daß an dem Kopfteil (3) eine Montageplatte (11) angeschraubt ist, welche derart gestaltet ist, daß eine parallel zu der Schrägfläche (25) verlaufende Spaltöffnung (19) in Verbindung mit dem abgeschrägten Teil der Rille (16) verbleibt.

7. Zange nach Anspruch 3, dadurch gekennzeichnet, daß das Kopfteil (3) eine gebogene Anschlagfläche (27) für die Spreizstellung des Handgriffs (4) aufweist.

8. Zange nach einem der vorhergehenden Ansprüche, dadurch gekennzeichnet, daß der Handgriff (4) eine Handöffnung (5) aufweist, welche beiderseitig von einem Wulst (6) umgeben ist.

9. Zange nach einem der vorhergehenden Ansprüche, dadurch gekennzeichnet, daß der Zangenkörper (1) und der Handgriff (4) aus einem zähharten Kunststoff bestehen.

## Claims

1. Tongs for moving flexible continuous material, in particular flexible bars, for pulling cables into cable protection conduits, with a tong body (1), which consists of an elongated handle part (2) and a head part (3), and which comprises a longitudinally extending groove (16) for receiving part of the continuous material, a handle (4) being pivotally mounted close to one end of the tong body (1) and a strip (7) being formed on the handle (4) and the handle (4) being mounted in the head part so that the strip (7) engages at least partly in the longitudinally extending groove (16) of the tong body (1), characterised in that the mounting of the handle (4) on an integrally formed, enlarged head part (3) of the tong body (1) being provided to be non-detachable, that opposite the handle (4) the tong body (1) is provided with a gap opening (19) for inserting the continuous material, so that the strip (7) engages in the groove (16) solely upon actuation of the handle (4) and that a hard rubber-like strip (17) is located on the base of the groove (16).

2. Tongs according to Claim 1, characterised in that the strip (7) has a bent part (8) towards the mounted end of the handle (4).

3. Tongs according to one of Claims 1 or 2, characterised in that located between the head part (3) of the tong body (1) and the handle (4) is a spring (12) so that the handle (4) is pushed into the expanded position with respect to the tong body (1).

4. Tongs according to Claim 3, characterised in that the spring (12) comprises two spring legs (13, 14) and a spring coil (15) wound through approximately 540° and that the one spring leg (14) bears against a stop surface (23) of the top part (3) and the other spring leg (13) bears against a retaining pin (22) of the handle (4).

5. Tongs according to one of the preceding Claims, characterised in that the groove (16) in the region of the top part (3) is bevelled at an acute angle (24) and is enlarged somewhat in the form of a trapezium between a corresponding inclined surface (25) and a stop face (20) for the continuous material (26).

6. Tongs according to Claim 5, characterised in that screwed to the head part (3) is a mounting plate (11), which is designed so that a gap opening (19) extending parallel to the inclined surface (25) remains in conjunction with the bevelled part of the groove (16).

7. Tongs according to Claim 3, characterised in that the top part (3) comprises a bent stop face (27) for the expanded position of the handle (4).

8. Tongs according to one of the preceding Claims, characterised in that the handle (4) comprises an opening (5) for a hand, which is surrounded on both sides by a bead (6).

9. Tongs according to one of the preceding Claims, characterised in that the tong body (1) and the handle (4) consist of a tough synthetic material.

## Revendications

1. Pince pour déplacer un matériau flexible en forme de barre, notamment des barreaux flexibles, pour l'insertion de câbles dans des tubes de protection pour câbles, comportant un corps de pince (1) constitué par une partie allongée de préhension (2) et une partie de tête (3) et possédant une rainure longitudinale (16) destinée à recevoir une partie du matériau en forme de barre, et dans laquelle une poignée (4) est montée pivotante à proximité d'une extrémité du corps (1) de la pince, une barrette (7) est formée sur la poignée (4) et cette dernière est montée dans la partie de tête de telle sorte que la barrette (7) s'engage au moins partiellement dans la rainure longitudinale (16) du corps (1) de la pince, caractérisée en ce que le montage de la poignée (4) sur la partie de tête élargie et conformée (3) du corps (1) de la pince est prévu de manière qu'elle ne soit pas amovible, que le corps (1) de la pince comporte, en vis-à-vis de la poignée (4), une ouverture en forme de fente (19) permettant l'insertion du matériau en forme de barre, de sorte que la barrette (7) s'engage dans la rainure (16) uniquement lors de l'actionnement de la poignée (4), et qu'une barrette en caoutchouc dur (17) est disposée dans le fond de la rainure (16).

2. Pince selon la revendication 1, caractérisée en ce que la barrette (7) possède une partie coudée (8) en direction de l'extrémité supportée de la poignée (4).

3. Pince selon l'une des revendications 1 ou 2, caractérisée en ce qu'un ressort (12) est disposé entre la partie de tête (3) du corps (1) de la pince et la poignée (4) de telle sorte que la poignée (4) est repoussée dans une position écartée par rapport au corps (1) de la pince.

4. Pince selon la revendication 3, caractérisée en ce que le ressort (12) comporte deux branches (13,14) et une spire (15) enroulée sur environ 540°, et qu'une branche (14) du ressort s'applique contre une surface de butée (23) de la partie de tête (3) et que l'autre branche (13) du ressort s'applique contre une tige de retenue (22) de la poignée (4).

5. Pince selon l'une des revendications précédentes, caractérisée en ce que la rainure (16) située dans la zone de la partie de tête (3) est biseautée suivant un angle aigu (24) et s'élargit avec une forme approximativement trapézoïdale entre une surface oblique correspondante (25) et une surface de butée (20) pour le matériau en forme de barre (26).

6. Pince selon la revendication 5, caractérisée en ce que sur la partie de tête (3) est vissée une plaque de montage (11) agencée de telle sorte qu'une ouverture en forme de fente (19) parallèle à la surface oblique (25) reste en liaison avec la partie biseautée de la rainure (16).

7. Pince selon la revendication 3, caractérisée en ce que la partie de tête (3) possède une surface de butée recourbée (27) pour la position écartée de la poignée (4).

8. Pince selon l'une des revendications précédentes, caractérisée en ce que la poignée (4) possède une ouverture (5) pour le passage de la main, qui est entourée, sur ses deux côtés, par un rebord (6).

9. Pince selon l'une des revendications précédentes, caractérisée en ce que le corps (1) de la pince et la poignée (4) sont réalisés en une matière plastique dure.

FIG.3

FIG.1

FIG.4

FIG.2

FIG.5

FIG.6